(19) Europäisches Patentamt / European Patent Office / Office européen des brevets

(11) **EP 4 031 428 B1**

(12) **EUROPEAN PATENT SPECIFICATION**

(45) Date of publication and mention of the grant of the patent:
**13.11.2024   Bulletin 2024/46**

(51) International Patent Classification (IPC):
**B60W 30/18** (2012.01)     **B60W 60/00** (2020.01)

(21) Application number: **20775727.9**

(52) Cooperative Patent Classification (CPC):
**B60W 30/18163; B60W 60/0011; B60W 60/00272; B60W 60/00276;** B60W 2520/105; B60W 2520/125; B60W 2520/14; B60W 2520/28; B60W 2540/18; B60W 2552/30

(22) Date of filing: **18.09.2020**

(86) International application number:
**PCT/IB2020/058721**

(87) International publication number:
**WO 2021/053607 (25.03.2021 Gazette 2021/12)**

(54) **MODEL-BASED DESIGN OF TRAJECTORY PLANNING AND CONTROL FOR AUTOMATED MOTOR-VEHICLES IN A DYNAMIC ENVIRONMENT**

MODELLBASIERTER ENTWURF EINER TRAJEKTORIENPLANUNG UND -STEUERUNG FÜR AUTOMATISIERTE KRAFTFAHRZEUGE IN EINER DYNAMISCHEN UMGEBUNG

CONCEPTION BASÉE SUR DES MODÈLES DE PLANIFICATION ET DE COMMANDE DE TRAJECTOIRE POUR VÉHICULES À MOTEUR AUTOMATIQUES DANS UN ENVIRONNEMENT DYNAMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.09.2019   EP 19198133**
**28.04.2020   IT 202000009259**

(43) Date of publication of application:
**27.07.2022   Bulletin 2022/30**

(73) Proprietor: **C.R.F. Società Consortile per Azioni**
**10043 Orbassano (TO) (IT)**

(72) Inventors:
• **RAFFONE, Enrico**
  **10043 Orbassano (TO) (IT)**
• **REI, Claudio**
  **10043 Orbassano (TO) (IT)**
• **ROSSI, Marco**
  **10043 Orbassano (TO) (IT)**

(74) Representative: **Studio Torta S.p.A. et al**
**Via Viotti, 9**
**10121 Torino (IT)**

(56) References cited:
**US-A1- 2015 161 895**

• JULIA NILSSON ET AL: "Lane Change Maneuvers for Automated Vehicles", IEEE TRANSACTIONS ON INTELLIGENT TRANSPORTATION SYSTEMS, vol. 18, no. 5, 1 May 2017 (2017-05-01), Piscataway, NJ, USA, pages 1087 - 1096, XP055748521, ISSN: 1524-9050, DOI: 10.1109/TITS.2016.2597966
• JULIA NILSSON ET AL: "Longitudinal and lateral control for automated lane change maneuvers", 2015 AMERICAN CONTROL CONFERENCE (ACC), 1 July 2015 (2015-07-01), pages 1399 - 1404, XP055348606, ISBN: 978-1-4799-8684-2, DOI: 10.1109/ACC.2015.7170929
• RAFFONE E ET AL: "Optimal look-ahead vehicle lane centering control design and application for mid-high speed and curved roads", 2019 18TH EUROPEAN CONTROL CONFERENCE (ECC), EUCA, 25 June 2019 (2019-06-25), pages 2024 - 2029, XP033595592, DOI: 10.23919/ECC.2019.8796031

- **ENRICO RAFFONE: "A Reduced Order Steering State Observer for Automated Steering Control Functions :", PROCEEDINGS OF THE 13TH INTERNATIONAL CONFERENCE ON INFORMATICS IN CONTROL, AUTOMATION AND ROBOTICS, 1 January 2016 (2016-01-01), pages 426 - 432, XP055748301, ISBN: 978-989-7581-98-4, DOI: 10.5220/0005959704260432**

## Description

### Technical Field of the Invention

The present invention relates to a model-based design of trajectory planning and control for automated motor-vehicles in dynamic environment.

The invention finds application in any type of road motor-vehicles, regardless of whether it is used for the transportation of people, such as a car, a bus, a camper, etc., or for the transportation of goods, such as an industrial vehicle (truck, B-train, trailer truck, etc.) or a light or medium-heavy commercial vehicle (light van, van, pick-up trucks, etc.).

### State of the Art

As is known, automated driving is one of the most challenging research fields in today's automotive industry, because the autonomous driving is expected to contribute to the quality road transportation under different aspects. Despite the fact that the improvements of active and passive safety equipment enabled to reduce the number of road accidents significantly in the last decades, still many accidents happen every day mainly due to human failure ([1]). Therefore, vehicle automated driving could further increase the safety level of transportation. Another important social expectation is the simultaneous increase of fuel consumption efficiency and decrease of pollution, which may also be enabled by the rise of automation. One of the most important topic in the autonomous driving field is trajectory planning, which represents the vehicle motion references design.

In this paper the term "trajectory" will be used to indicate the state of a vehicle, defined as the set of temporal trends as position, orientation, and speed, which define the desired states of the vehicle motion, over a period of time, to distinguish it from the term "path", which is generally used to indicate the position of a vehicle over a period of time, without worrying about velocity or higher order terms.

A huge number of different trajectory planning approaches have been proposed ([2]). Available works can be reformulated approximately into three macro-categories: heuristic-based methods, geometric-based methods, and methods based on optimal control techniques.

Heuristic-based approaches usually apply artificial intelligence techniques, such as machine learning methods, search-based methods and random sampling methods. For example, A* (search-based method) creates a discrete spatiotemporal lattice of the vehicle's surrounding to search for a collision free path along the points of the lattice ([3], [4]). RRT (Rapidly-exploring Random Tree - Random sampling methods) ([5] and [6]) firstly defines some metrics for the proximity of two spatial points and samples random points in the space around the vehicle. Then, starting from the initial or the required end-position of the vehicle, the algorithm builds up a tree structure from the sampled points. If a random sample is found to be collision-free and close to a previous element of the tree, the predefined metrics is added to the tree. The process is continued until a branch of the tree approaches the required final (or initial) point of the vehicle, and a path is then evaluated along the tree. SVM (Support Vector Machine - Machine learning method) foresees learning models with associated learning algorithms that analyse data and recognize patterns ([7]). Geometric based methods ([8] and [9]) design trajectories based on some parametric geometrical curves as clothoids or splines. These algorithms calculate the parameters of the curves with the consideration of geometrical constraints, such as the derivatives of the curve, the limited steering angle of the vehicle and the maximal allowed lateral acceleration ([10]).

Geometric-based methods are suitable mainly for low speed applications such as automated parking but, at higher speeds, these can't consider the dynamic behaviour of vehicle and therefore its stability. Most of the geometric-based and heuristic-based methods generate paths instead of trajectories. To obtain a trajectory, some speed profile could be used to convert the computed path into a trajectory ([11]).

Optimal control-based methods, e.g. [12], use optimal control techniques such as MPC (Model Predictive Control) and NLP (Nonlinear Programming) in order to generate the trajectory. Optimization techniques are used in [13] and [14] to find the appropriate control input sequence, i.e. steering wheel angle and vehicle longitudinal acceleration, that drives the vehicle to the desired end-point. The behaviour of the system in term of system states to the given sequence of control actions is calculated by a model-based prediction. These methods enable the direct definition of trajectories instead of paths.

US 2015/161895 A1 discloses a lane change control apparatus including a lane information extractor configured to obtain lane information for a driving lane by using image information for a lane. A lane changeable time calculator is configured to calculate a lane changeable time by using speed information of an own vehicle and information for peripheral vehicles obtained from sensing apparatuses installed in the vehicle. A reference yaw rate generator is configured to determine a lane change time by using the lane changeable time and speed information and generate a reference yaw rate symmetrically changed on a time axis during the lane change time by using the lane change time and lane information. A reference yaw rate tracker is configured to control an operation of the own vehicle so as to track the reference yaw rate.

**Subject-matter and Summary of the Invention**

The aim of the present invention is to provide a trajectory planning method based on constrained optimizations that is able to generate a dynamically feasible, comfortable, and customizable trajectory and, at the same time, to drive highly automated vehicles at mid/high speed.

According to the present invention, an automotive electronic dynamics control system is provided, as claimed in the appended claims.

**Brief Description of the Drawings**

Figure 1 shows a flowchart of the intellectual process implemented by a driver of a motor-vehicle to plan a trajectory for the motor-vehicle during driving on an highway.

Figures 2 and 3 show principle and detailed block diagrams of a trajectory planning implementation.

Figure 4 shows a depiction of a safe corridor and of single track model used in Model Predictive Control.

Figures 5, 6, and 7 show depictions of free corridor definitions in different driving scenarios.

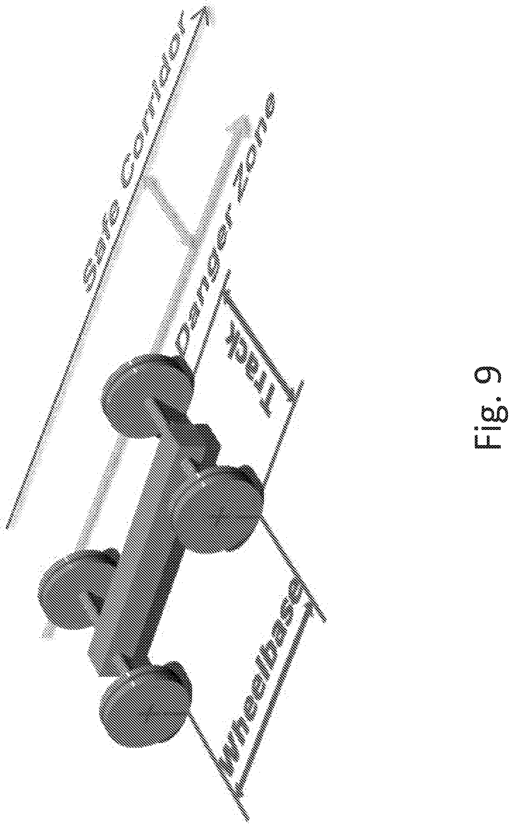

Figure 8 and 9 show depictions of a safe corridor concept and details thereof.

Figures 10a, 10b, 10c, and 10d show graphs of a planned position on road of an ego motor-vehicle that tracks a decelerating leader vehicle in different simulation driving scenarios.

Figures 11a, 11b, 11c, and 11d show graphs of a planned position on road of an ego motor-vehicle that overtakes a slower leader vehicle in different simulation driving scenarios.

Figure 12 shows a graphical depiction of a planned position on road of an ego motor-vehicle that overtakes a slower leader vehicle with respect to an incoming obstacle on the overtake lane.

Figure 13 shows a photographical depiction of a planned position on a test track of a real controlled ego motor-vehicle that overtakes a slower leader vehicle on the test track.

Figures 14, 15, and 16 show graphs of a real-time overtaking manoeuvre on a test track in different simulation driving scenarios.

**Detailed Description of Preferred Embodiments of the Invention**

The present invention will now be described in detail with reference to the attached figures to allow a person skilled in the art to make and use it. Various modifications to the described embodiments will be immediately apparent to the persons skilled in the art and the generic principles described can be applied to other embodiments and applications without departing from the protective scope of the present invention, as defined in the attached claims. Therefore, the present invention should not be considered limited to the described and illustrated embodiments, but it must be accorded the widest protective scope in accordance with the described and claimed features.

Where not defined otherwise, all the technical and scientific terms used herein have the same meaning commonly used by persons skilled in the art pertaining to the present invention. In the event of a conflict, this description, including the definitions provided, will be binding. Furthermore, the examples are provided for illustrative purposes only and as such should not be considered limiting.

In particular, the block diagrams included in the attached figures and described below are not intended as a representation of structural characteristics or constructive limitations, but must be interpreted as a representation of functional characteristics, i.e. intrinsic properties of the devices and defined by the obtained effects or functional limitations, which can be implemented in different ways so as to protect their functionalities (operating abilities).

In order to facilitate the understanding of the embodiments described herein, reference will be made to some specific embodiments and a specific language will be used to describe the same. The terminology used in the present document has the purpose of describing only particular embodiments, and is not intended to limit the scope of the present invention.

The present invention provides a trajectory planning algorithm based on constrained optimizations that is able to generate a dynamically feasible, comfortable, and customizable trajectory and, at the same time, to drive highly automated vehicles at mid/high speed. The trajectory planning algorithm considers the other vehicle dynamics and guarantees the dynamical feasibility of the planned trajectory by a model-based prediction of the vehicle motion. The trajectory planning algorithm tries to reduce computational cost of a nonlinear optimization by decoupling longitudinal and lateral dynamics planning and control. This is achieved by using a sequential behavioural algorithm that mixes model-based scenario reconstruction/prediction with the planning of longitudinal and lateral dynamics.

In order to decouple longitudinal and lateral trajectory planning, the present invention stems from a solution disclosed in [16], [17], and [18] and improves and enhances it by adding model details mainly about lateral dynamics optimization, so as to avoid additional closed loop at vehicle level and to provide control commands ready to be applied by vehicle actuations: Electric Power Steering (EPS) and Braking System Module (BSM).

In particular, the present invention provides a time-sustainable algorithm ready to be integrated in Automotive ECU that is able to: i) track main obstacles and build a road scenario; ii) take a decision in term of driving strategy; iii) design feasible vehicle trajectories; and iv) drive the vehicle in a way that is compatible with current actuations.

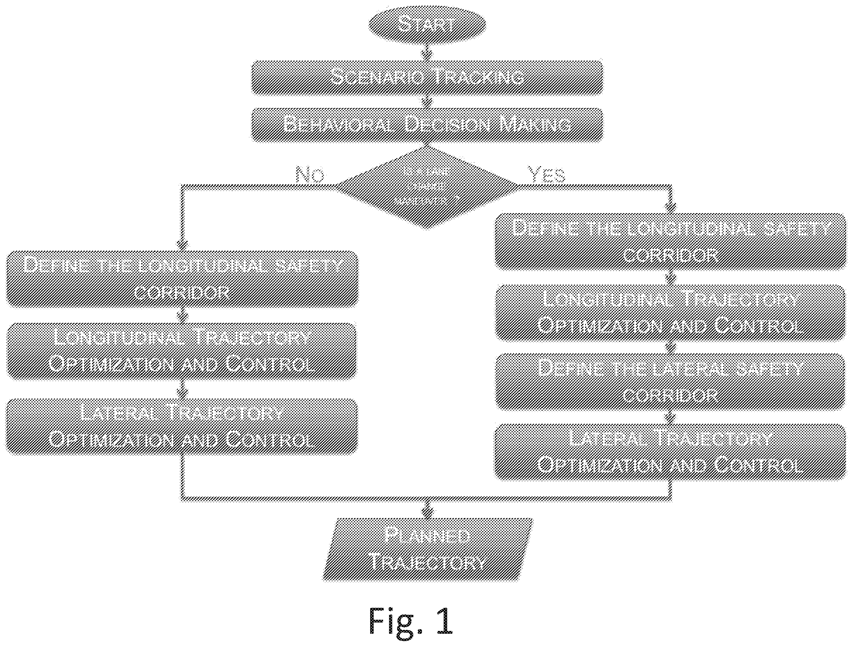

The basic idea to approach the trajectory planning task in highway is synthetized in Figure 1, which depicts a flow chart describing the intellectual process that is implemented when a user drives a car on an highway.

Basically, there is a scenario tracking activity, where the driver observes all the potential obstacles in vehicle surroundings. Based on the situation, a decision will be taken: to stay in the same lane or to implement a lane change manoeuvre. In both situations, the driver has to define a longitudinal safety corridor: if the vehicle remains in the same lane, the space ahead the vehicle is observed until the first obstacle on the same lane. Otherwise, in case of a lane change manoeuvre, the longitudinal safety corridor is the longitudinal free space ahead the vehicle during lane change. In order to overtake a vehicle, the driver, after having made the mentioned considerations on longitudinal speed, defines also how to approach the lateral planning. This is done by defining the lateral safety corridor during the manoeuvre, optimizing the lateral trajectory in coherence with longitudinal behaviour planned in previous step.

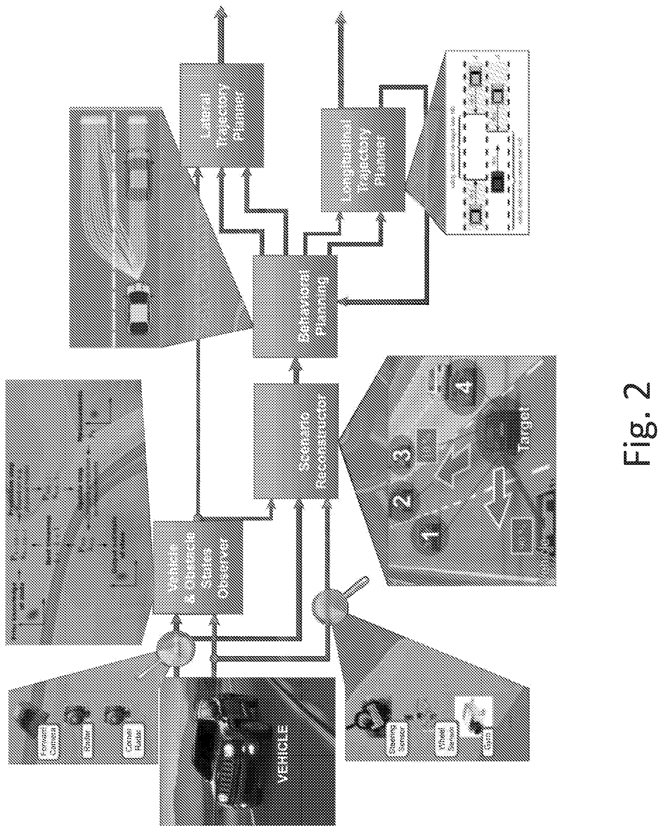

Figure 2 shows a block diagram of an implementation of this intellectual process by an automotive electronic dynamics control system, referenced as a whole with reference numeral 1 of an automated motor-vehicle, hereinafter referred to as ego motor-vehicle and referenced as a whole with reference numeral 2.

In particular, Figure 2 shows the flow of measured information on a real vehicle is translated into longitudinal and lateral planned trajectories. In details, the proposed algorithm uses traditional active chassis sensors, such as wheel speed sensors, steering wheel sensor, and inertial measurement unit as well as ADAS surroundings sensors such as forward looking camera and medium range front/comer radars.

The main phases described in the previous paragraph are mapped on the depicted blocks, for example the scenario tracking activity is implemented by the blocks labelled 'Vehicle & Obstacle State Observer' and 'Scenario Reconstructor' and referenced with reference numerals 3 and 4. The block labelled 'Behavioural Planner' and referenced with reference numeral 5 implements and defines the decision making about remaining in the same lane or starting a lane change, while longitudinal/lateral safety corridors and all the main constrains for the non-linear optimizations are included in the blocks labelled 'Longitudinal Trajectory Planner' and 'Lateral Trajectory Planner' and referenced with reference numerals 6 and 7.

About general non-linear optimization problem applied to a physical phenomenon that can be fairly modelled with linear lumped parameter model, the receding horizon control theory is used in a wide and commonly acknowledged way. The main advantages of this control theory are related to the possibility to use a physical model and related constraints for the optimization. This theory is a natural evolution of state feedback optimal control that has as basic requirement the closed loop stability. In this context, it's possible to use the model to calculate the effect of a sequence of commands on the plant and to minimize the tracking error of low level controls by applying only the first sample of planned vector of commands. The computational effort required for not trivial optimization problems is significant. And this is one of the reasons that lead to implement two different optimization problems based on linear longitudinal and lateral dynamics models.

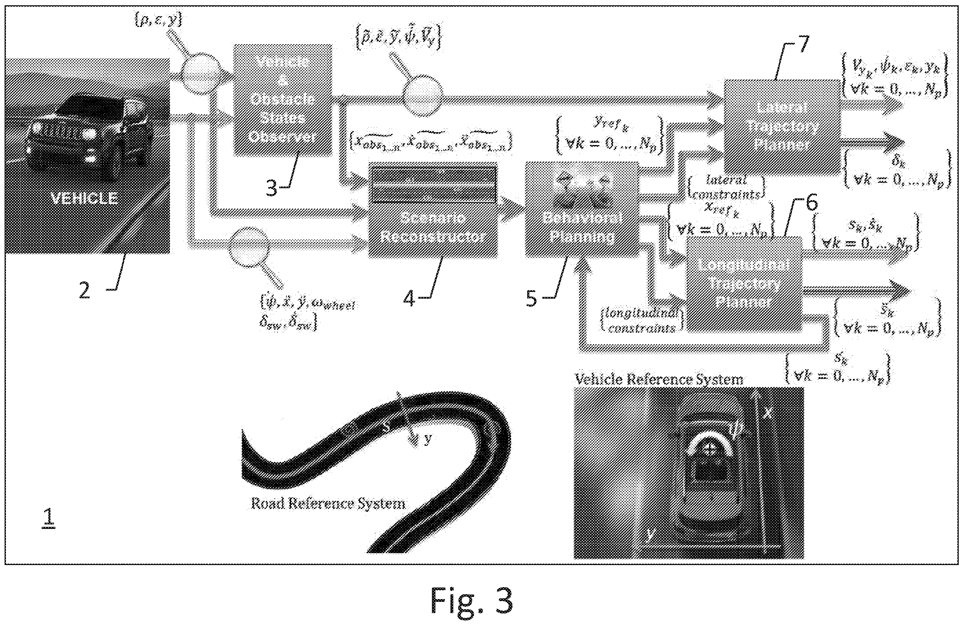

In order to describe the trajectory planning and control implementation of the present invention, Figure 3 shows the same block diagram as the one shown in Figure 2, but with additional details of the vehicle reference system, the road reference system, and the physical quantities involved, where:

| Name | Unit | Description |
|---|---|---|
| $\dot{\psi}$ | rad/s | Vehicle yaw rate |
| $a_x$ | m/s$^2$ | Vehicle longitudinal acceleration |
| $V_x$ | m/s | Vehicle longitudinal speed |
| $a_y$ | m/s$^2$ | Vehicle lateral acceleration |
| $s$ | m | Displacement along curvilinear axis |
| $Y_{lat}$ | m | Lateral displacement |
| $\omega_{wheel}$ | rad/s | Wheel spin speed |
| $\delta_{sw}$ | rad | Steering wheel angle |

With regard to the Vehicle & Obstacle State Observer **3** and the Scenario Reconstructor **4,** ego motor-vehicle states and obstacles states are observed using a series of Kalman filters useful to:

- filter noisy signals (vehicle/obstacle accelerations, yaw rate, etc.);
- reconstruct obstacles states during ADAS sensors blinded areas; and
- reconstruct not available information (vehicle lateral speed).

Filtered and indirect measured signals are fundamental for the Scenario Reconstructor **4** and the Behavioral Planner **5.** Ego motor-vehicle states are mainly useful for the lateral trajectory optimization problem, where it's fundamental to measure vehicle lateral states to consider vehicle model in order to preserve vehicle stability. Obstacle states are used mainly in the Behavioral Planner **5** where filtered/reconstructed signals are starting point of decision scenario preview. The ego motor-vehicle state observer is synthetized according to vehicle Kalman observer even designed in [22]. The state observer provides camera filtered measurements: yaw rate ($\dot{\psi}$), heading angle ($\varepsilon$), and lateral displacement ($Y_{lat}$). Moreover, it reconstructs the lateral vehicle speed ($V_y$), giving all the information that the controller needs.

A similar approach is used to filter and to reconstruct the states related to the longitudinal movements of obstacles. Each obstacle is modelled as a material point that moves with constant acceleration. The use of a constant acceleration model is a good tradeoff between complexity and prediction accuracy considering also measurement reliability of ADAS sensors. In coherence with defined assumptions, the considered discrete model is:

$$
\begin{bmatrix}
\ddot{x}_{obs}(k) \\
\dot{x}_{obs}(k) \\
x(k) \\
\ddot{x}_{ego}(k) \\
\dot{x}_{ego}(k)
\end{bmatrix}
=
\begin{bmatrix}
1 & 0 & 0 & 0 & 0 \\
T & 1 & 0 & 0 & 0 \\
\dfrac{T^2}{2} & T & 1 & -\dfrac{T^2}{2} & -T \\
0 & 0 & 0 & 1 & 0 \\
0 & 0 & 0 & T & 1
\end{bmatrix}
\begin{bmatrix}
\ddot{x}_{obs}(k-1) \\
\dot{x}_{obs}(k-1) \\
x(k-1) \\
\ddot{x}_{ego}(k-1) \\
\dot{x}_{ego}(k-1)
\end{bmatrix}
$$

All the longitudinal information of the surrounding vehicles are available by using this approach and it is possible to design the optimal trajectory for the ego motor-vehicle **2.** About lateral positions, no estimators are applied due to the difficulty in modeling lateral movement of the obstacles.

With regard to the Longitudinal Trajectory Planner **7** and the Lateral Trajectory Planner **6,** they are both based on the Model Predictive Control (MPC) theory. As mentioned before with MPC, it is possible to:

- concurrently solve problems of obstacle avoidance, feasible trajectory selection, and trajectory following. So trajectory planning and trajectory tracking are handled together;
- guarantee theoretical closed loop stability obtained by a model based design;
- integrate forward information resulting from traffic predictions or road geometry; and
- explicitly consider constraints on actuators and states/outputs values.

Vehicle Longitudinal and Lateral dynamics are managed with two different Trajectory Planners: the Longitudinal Trajectory Planner **7,** which is designed to compute a planned longitudinal trajectory, and the Longitudinal Trajectory Planner **6,** which is designed to compute a planned lateral trajectory, and where the planned longitudinal trajectory is computed before the planned lateral trajectory. In practice, a real-time, non-linear convex optimization problem [20] is solved on a finite horizon based on:

- an experimental validated linear model of dynamics to control/plan;
- a cost function of target variables and inputs to be minimized on finite horizon;
- a series of:

  ○ constraints on system state variables useful to represent the 'free corridor' on considered horizon;
  ○ control targets as linear combination of system states to track on considered horizon.

With regard to the longitudinal dynamics optimization problem formulation, it's fundamental to define the considered model reference. In order to simplify the problem, the longitudinal dynamics of the ego motor-vehicle **2** is modeled by a simple double integrator in discrete time (k is the sample time).

$$\begin{cases} v_{x_{k+1}} = v_{x_k} + T \cdot a_{x_k} \\ s_{k+1} = s_k + T \cdot v_{x_k} + \frac{1}{2} \cdot T^2 \cdot a_{x_k} \end{cases}$$

Defining states, input and output respectively as:

$$\overline{x_{long_k}} = \begin{bmatrix} v_{x_k} \\ s_k \end{bmatrix}; u_{long_k} = a_{x_k}; y_{long_k} = v_{x_k}$$

where $s_k$ is the vehicle position along curvilinear axis, $v_{x_k}$ is the current vehicle speed, and $a_{x_k}$ the vehicle acceleration.

With the classical state space representation, it is possible to describe the model as:

$$\bar{x}_{long_{k+1}} = \begin{bmatrix} 1 & 0 \\ T & 1 \end{bmatrix} \cdot \bar{x}_{long_k} + \begin{bmatrix} T \\ \frac{T^2}{2} \end{bmatrix} \cdot u_{long_k}$$

$$y_{long_k} = \begin{bmatrix} 1 & 0 \end{bmatrix} \cdot \bar{x}_{long_k}$$

At each timestamp the following optimization problem is to be solved:

$$\min_{u_{long},\sigma} J(y_{long}, u_{long}, \sigma) = \sum_{i=1}^{N_p} \left\| y_{long_{ref}}(k+i) - y_{long}(k+i) \right\|_Q^2 + \sum_{i=0}^{N_c-1} \left\| u_{long}(k+i) \right\|_R^2$$

$$+ \sum_{i=1}^{N_p} \left\| \sigma(k+i) \right\|_\lambda^2$$

subject to:

$$\bar{x}_{long_{i+1,k}} = A\bar{x}_{long_{i,k}} + Bu_{long_{i,k}}$$

$$y_{long_{i,k}} = C\bar{x}_{long_{i,k}}$$

$$s_{min_{i,k}} - \sigma_{i,k} \leq s_{i,k} \leq s_{max_{i,k}} + \sigma_{i,k} \quad i = 0, ..., N_p;$$

$$v_{min} \leq v_{i,k} \leq v_{max}$$

$$u_{long_{min}} \leq u_{long_{i,k}} \leq u_{long_{max}}$$

$$\Delta u_{long_{min}} \leq \Delta u_{long_{i,k}} \leq \Delta u_{long_{max}}$$

where:

$y_{long_{ref}}$ is the reference longitudinal speed,
$Q$ is the positive definite matrix with the weight on the tracked outputs,
$R$ is the positive definite matrix with the weights on the control inputs,
$\sigma$ is a slack variable used to soften the constraints,
$\lambda$ is the constraints violation weight,

$s_{min}$ and $s_{max}$ respectively represents the minimum and maximum constraints on the ego motor-vehicle position,

$v_{min}$, $v_{max}$, $u_{long_{min}}$, $u_{long_{max}}$, $\Delta u_{long_{min}}$, $\Delta u_{long_{max}}$ respectively represents the constraints on the minimum and maximum speed, acceleration and jerk to also guarantee a comfortable driving experience,

$k$ represents the current timestamp, and

$i$ is the index that scan the prediction horizon up to the values $N_c$ / $N_p$.

With regard to the lateral dynamics optimization problem formulation, the reference model is the single track with the linearization of differential equations that links the car model with road geometry, as follows:

$$\begin{cases} V_{y_{k+1}} = \left(1 - \dfrac{C_f + C_r}{m \cdot V_x} \cdot T\right) \cdot V_{y_k} + \dfrac{-m \cdot V_x^2 - C_f \cdot l_1 + C_r \cdot l_2}{m \cdot V_x} \cdot T \cdot \dot{\psi}_k + \dfrac{C_f}{m \cdot \tau} \cdot T \cdot \delta_{SW_k} \\[2ex] \dot{\psi}_{k+1} = \dfrac{-C_f \cdot l_1 + C_r \cdot l_2}{J_z \cdot V_x} \cdot T \cdot V_{y_k} + \left(1 - \dfrac{C_f \cdot l_1^2 + C_r \cdot l_2^2}{J_z \cdot V_x} \cdot T\right) \cdot \dot{\psi}_k + \dfrac{C_f \cdot l_1}{J_z \cdot \tau} \cdot T \cdot \delta_{SW_k} \\[2ex] \varepsilon_{k+1} = \varepsilon_k + \dot{\psi}_k \cdot T - V_{x_k} \cdot T \cdot \rho_k \\[2ex] Y_{lat_{k+1}} = Y_{lat_k} + V_x \cdot T \cdot \varepsilon_k + V_{y_k} \cdot T \end{cases}$$

where the ego motor-vehicle parameters are:

| Name | Unit | Description |
|---|---|---|
| $C_f$ | N/rad | Cornering stiffness at the front axle |
| $C_r$ | N/rad | Cornering stiffness at the rear axle |
| $m$ | Kg | Vehicle mass |
| $l_1$ | m | Distance between front axle and CoG |
| $l_2$ | m | Distance between rear axle and CoG |
| $J_z$ | Kg*m$^2$ | Inertia with respect to yaw motion |
| $V_x$ | m/s | Vehicle speed |
| $T$ | s | Sample time |
| $\tau$ | - | Steering wheel to wheel ratio |
| $Y_{lat}$ | m | Lateral displacement |
| $\varepsilon$ | rad | Heading angle |
| $\rho$ | 1/m | Road Curvature |

Defining states, input, output, and disturbance as:

$$\bar{x}_{lat_k} = \begin{bmatrix} V_{y_k} \\ \dot{\psi}_k \\ \varepsilon_k \\ Y_{lat_k} \end{bmatrix}; \quad u_{lat_k} = \begin{bmatrix} \delta_{sw_k} \end{bmatrix}; \quad \bar{y}_{lat_k} = \begin{bmatrix} \varepsilon_k \\ Y_{lat_k} \end{bmatrix}; \quad d_k = \begin{bmatrix} \rho_k \end{bmatrix};$$

at each timestamp the following optimization problem is to be solved:

$$\min_{u_{lat},\bar{\sigma}} J(\bar{y}_{lat}, u_{lat}, \bar{\sigma}) = \sum_{i=1}^{\bar{N}_p} \left\| \bar{y}_{lat_{ref}}(k+i) - \bar{y}_{lat}(k+i) \right\|_{\bar{Q}}^2 + \sum_{i=0}^{\bar{N}_c-1} \| u_{lat}(k+i) \|_{\bar{R}}^2$$

$$+ \sum_{i=1}^{\bar{N}_p} \| \bar{\sigma}(k+i) \|_{\bar{\lambda}}^2$$

subject to:

$$\bar{x}_{lat_{i+1,k}} = A\bar{x}_{lat_{i,k}} + Bu_{lat_{i,k}} + B_d d_{i,k} \quad i = 0, \ldots, \bar{N}_p;$$

$$\bar{y}_{lat_{i,k}} = C\bar{x}_{lat_{i,k}}$$

$$u_{lat_{min}} \leq u_{lat_{i,k}} \leq u_{lat_{max}}$$

$$Ylat_{min_{i,k}} - \bar{\sigma}_{i,t} \leq Ylat_{i,k} \leq Ylat_{max_{i,k}} + \bar{\sigma}_{i,k}$$

where:

$\bar{y}_{lat_{ref}}$ is the lateral displacement and heading angle references that are to be tracked,
$\bar{Q}$ is the related positive definite matrix of weights;
$\bar{R}$ is the positive definite matrix with the weights on the control inputs;
$\bar{\sigma}$ is a slack variable used to soften the constraints and $\bar{\lambda}$ is the constraints violation weight;
$u_{lat_{min}}$ and $u_{lat_{max}}$ represent respectively a constraint on the minimum and maximum steering wheel angle applicable by the system;
$Ylat_{min}$ and $Ylat_{max}$ respectively represents the constraints on the minimum and maximum lateral displacement that the vehicle has to respect; and k represents the current timestamp, and
i is the index that scan the prediction horizon up to the values $\bar{N}_c$ / $\bar{N}_p$ .

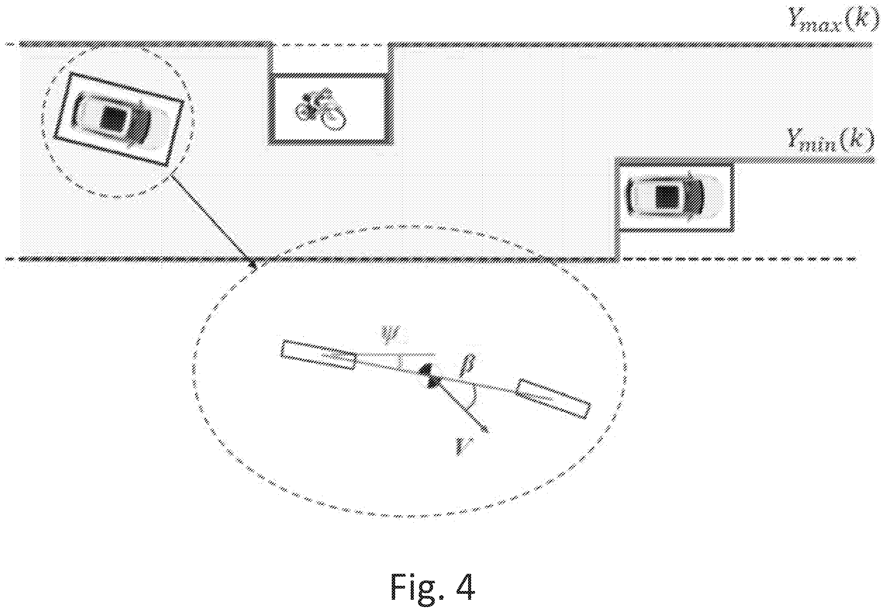

Figure 4 schematically shows the optimization safe corridor and the single track model used in the MPC formulation [19].

With regard to the Behavioral Planner **5,** as explained before, it is designed to implement the decision shown in Figure 1 and to generate the different constraints and references for the Longitudinal and Lateral Trajectory Planners **6, 7**. Main decisions are based on time-to-collision (TTC) concept: it is defined as "the time required for two vehicles to collide if they continue at their present speed and on the same path". It may be appreciated that lower TTC values correspond to higher traffic conflict severities. Although this point has been argued in the safety assessment literature, it seems clear that lower TTC values correspond to a higher probability of collision. Hence, TTC is generally perceived to be a primary and efficient measure in traffic safety assessment especially in assessing conflicts.
Depending on the traffic conditions, different constraints are generated:

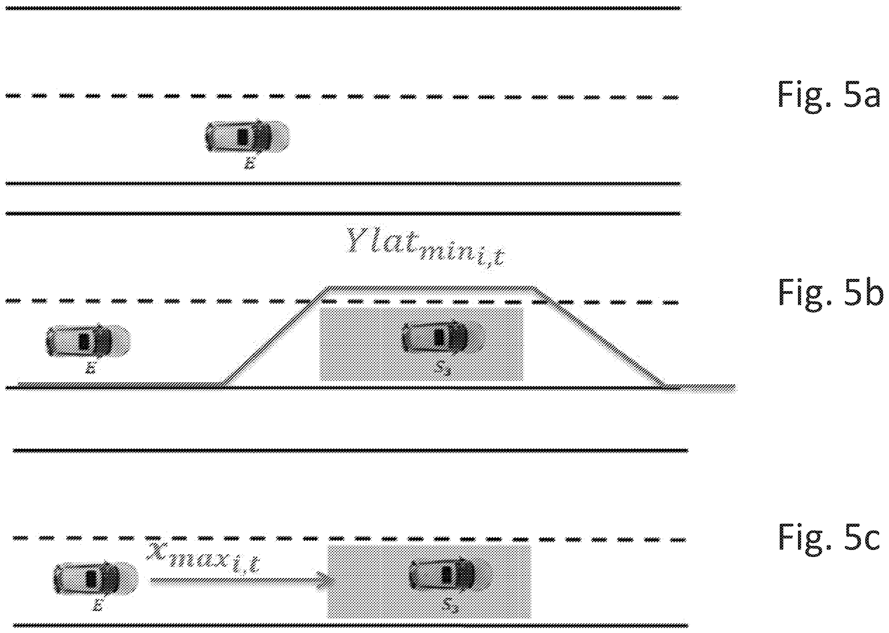

1. When no obstacles are detected, the constraints sent to the Longitudinal and Lateral Trajectory Planners **6, 7** are only the lane boundaries (Figure 5a).
2. If only one obstacle is detected in front of the ego motor-vehicle 2, two cases may arise depending on the relative speed:

   a. Overtake request: in this case, the lateral constraint is modified in order to allow the maneuver to be performed, while no longitudinal constraints are generated regarding the forward obstacle (Figure 5b);
   b. Tracking request: a longitudinal constraint is generated, lateral constraints still keeping the lane boundaries (Figure 5c).

3. If there is an incoming obstacle on the overtake lane together with a slower vehicle in front of the ego the time to collision (TTC) with respect to the rear obstacle is evaluated:

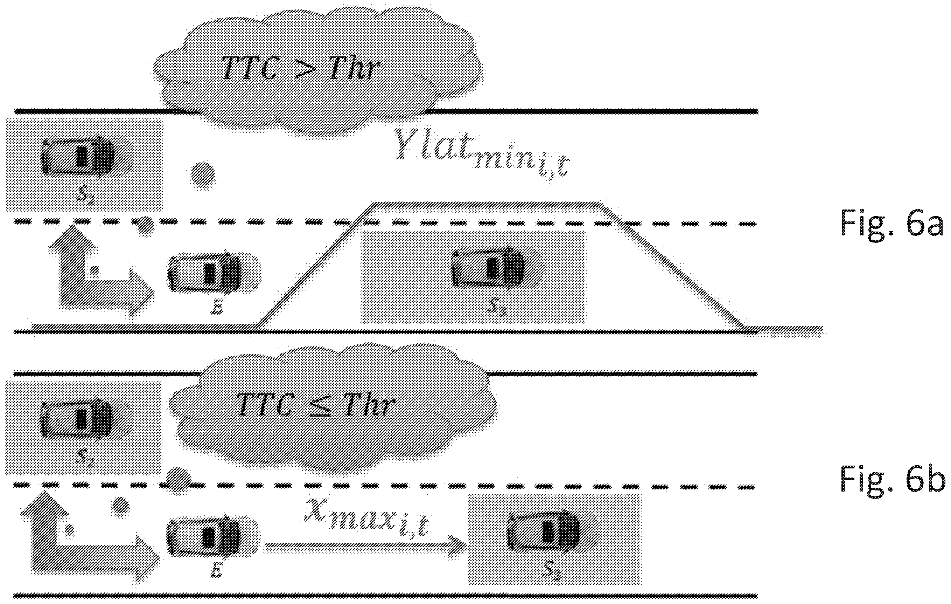

   a. No collision: overtake request, the lateral constraint is modified (Figure 6a);

b. Collision: tracking request, a longitudinal constraint is generated (Figure 6b);

4. Once the overtake has started, it is possible to find another obstacle in the overtake lane. In this case, the obstacle in the overtake lane has to be tracked in order to maintain the safety distance.

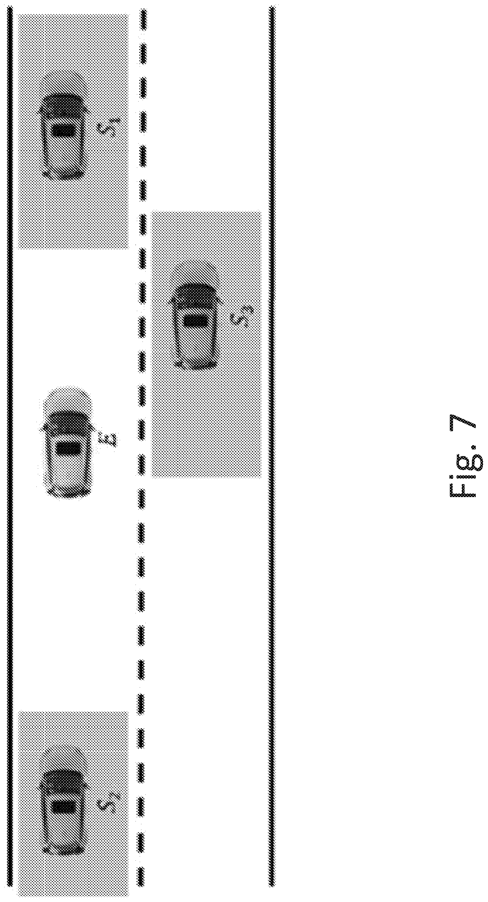

Figure 7 schematically shows the free corridor definition for 4) condition (a, b).

The trajectory planning of the present invention has been simulated and experimentally validated via simulation by using IPG Car-Maker in a Matlab/Simulink environment. Afterwards, only part of simulation scenarios has been evaluated on a Fiat 500X equipped with a dSPACE MicroAutobox II.

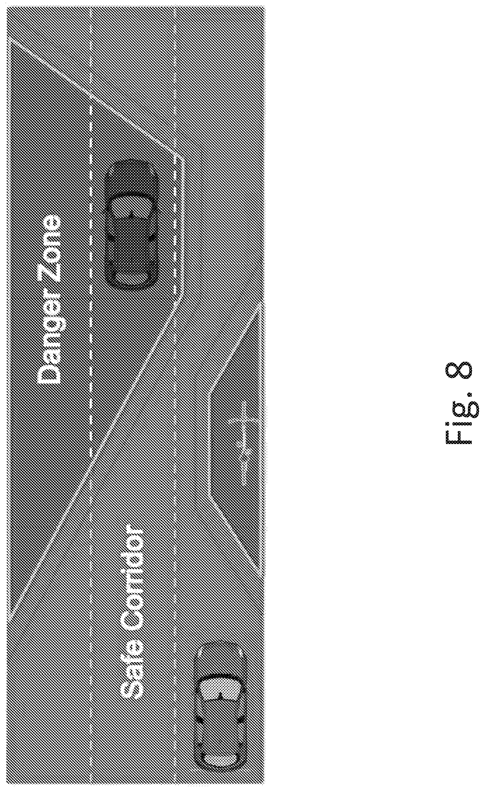

For this purpose, the following target for the evaluations has been defined: the fulfillment of 'Safe Corridor' as defined in green color in Figure 8.

The dotted line limits the 'Danger Zone' that the ego motor-vehicle 2 must avoid (i.e., a fixed shape around obstacle according to its type).

The continuous line defines the constrain used for MPC optimization (longitudinal and lateral) (i.e., a fixed distance to 'Danger Zone' and inside 'Safe Corridor' that is calculated as half of vehicle track / wheelbase + additional space tolerance).

Four development scenarios useful to focus on the main described contents has been developed. Scenarios are defined as follows, where presented contents are allocated on different driving conditions:

| Scenario description | Behavioral Planning | Trajectory Planning | |
|---|---|---|---|
| | | Lateral Planning | Longitudinal Planning |
| Tracking an obstacle | ✗ | ✗ | ✓ |
| Overtaking an obstacle | ✗ | ✓ | ✓ |
| Overtake Evaluation with respect to an incoming obstacle on the left lane | ✓ | ✓ | ✓ |
| General and more complex scenario | ✓ | ✓ | ✓ |

The attention was concentrated on the first and second scenarios (tracking and overtaking), and shortly on overtaking with an incoming obstacle on the left lane.

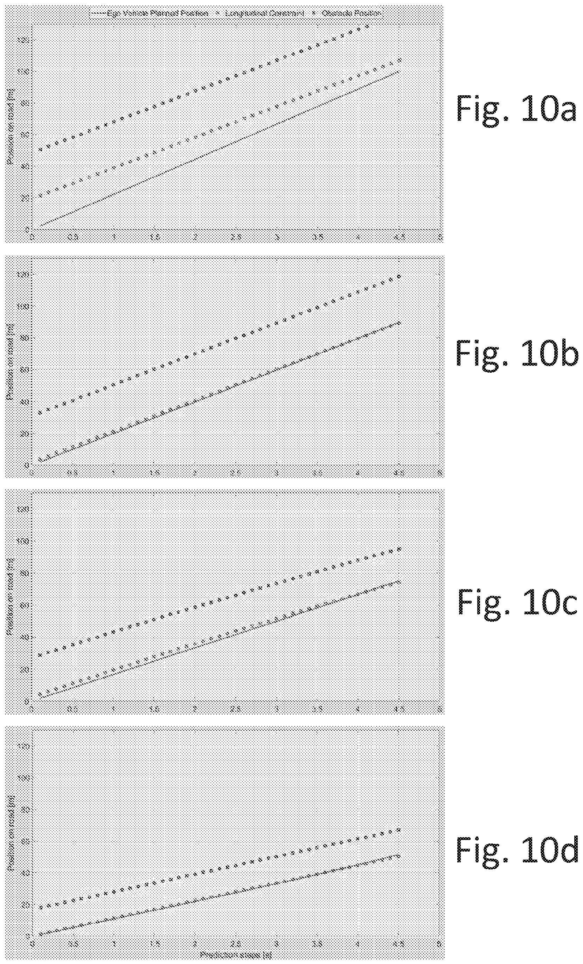

The plot of the first simulation scenario, where the planned position on road of an ego motor-vehicle that tracks a decelerating leader vehicle (Figures 10a,b,c,d) is depicted, foresees that the ego motor-vehicle (80 km/h) engages the leader vehicle (initial speed 70 km/h) (Figures 10a-b), that, subsequently, decides to decelerate to 40 km/h, so the ego motor-vehicle decelerates to leader vehicle speed (Figures 10c-d). Figures 10a,b,c,d depict the sequence of planned longitudinal trajectory with a time step of 100ms and prediction steps 45 (Np). The chosen prediction steps is enough to represent a quasi-infinite horizon for longitudinal dynamics optimization (about 125 meters at 100 km/h).

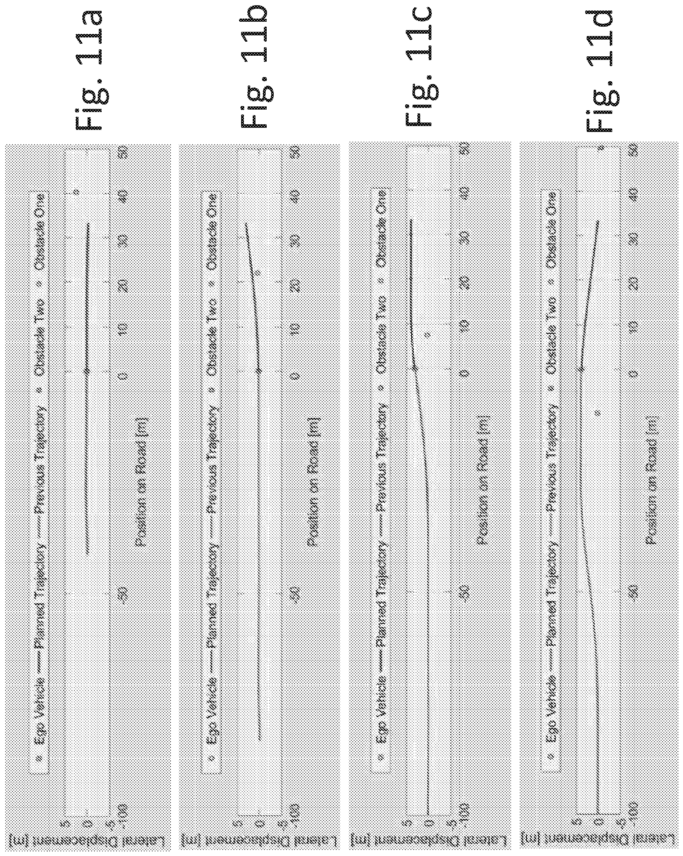

In the plot of the second simulation scenario, where the planned position on road of an ego motor-vehicle that overtakes a slower leader vehicle (Figures lla,b,c,d) is depicted, the ego motor-vehicle (80 km/h) engages the two leader vehicles (Figure 11a), the relative speed is over than defined tracking threshold, so ego motor-vehicle decides to overtake both vehicles (Figure 11b). Figures 11a,b,c,d depict the sequence of planned lateral trajectory during overtaking maneuver of first leader vehicle with a time stamp of 50ms and prediction steps 31 (Np).

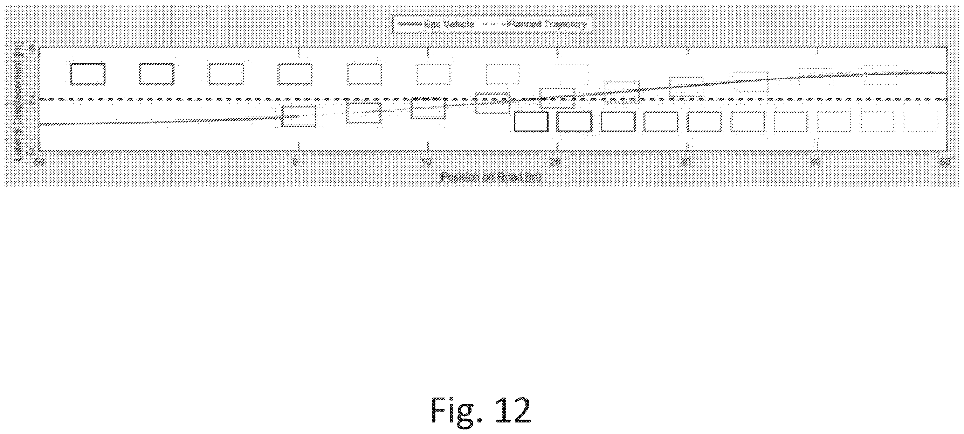

As last simulation scenario: overtaking evaluation with respect to an incoming obstacle on the left lane. The plot in Figure 12 shows an ego motor-vehicle with cruise speed of 90 km/h that engages a leader motor-vehicle with cruise speed of 60 km/h, then an incoming vehicle supervenes on the left lane, the ego motor-vehicle evaluates the time to collision before enabling the overtake and starting the maneuver. The plot in Figure 12 also shows a space-based planned position of the ego motor-vehicle, while the depth of car boundaries shows the same time stamp of different motor-vehicles.

The present invention has been validated on an FCA test track with an ego motor-vehicle and a cooperative leader motor-vehicle, and the previously presented 'overtaking an obstacle' scenario has been selected as reference test. The validation test has been setup in a straight road with three lanes. Each lane width is 3.7m, the straight length is 1.3 km.

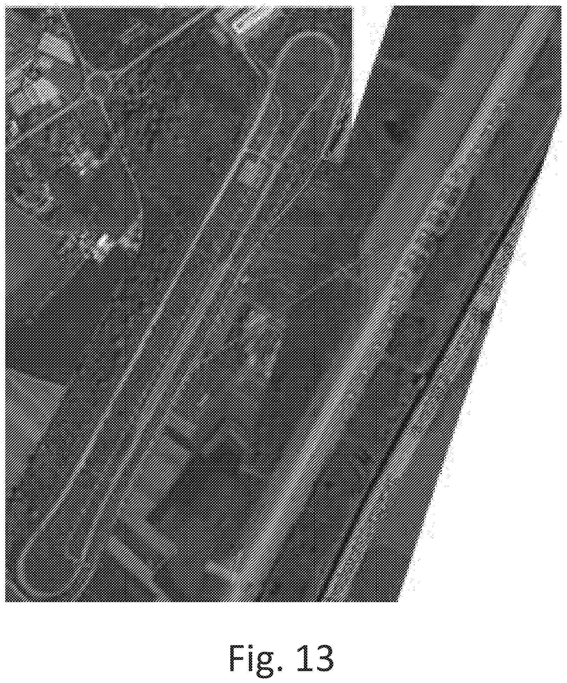

The plot of this validation scenario depicted in Figure 13 foresees that the ego motor-vehicle engages the leader motor-vehicle, the relative speed is higher than defined tracking threshold, so ego motor-vehicle speed is regulated in order to overtake leader motor-vehicle; then ego motor-vehicle moves on the left lane keeping the safe distance from the leader motor-vehicle.

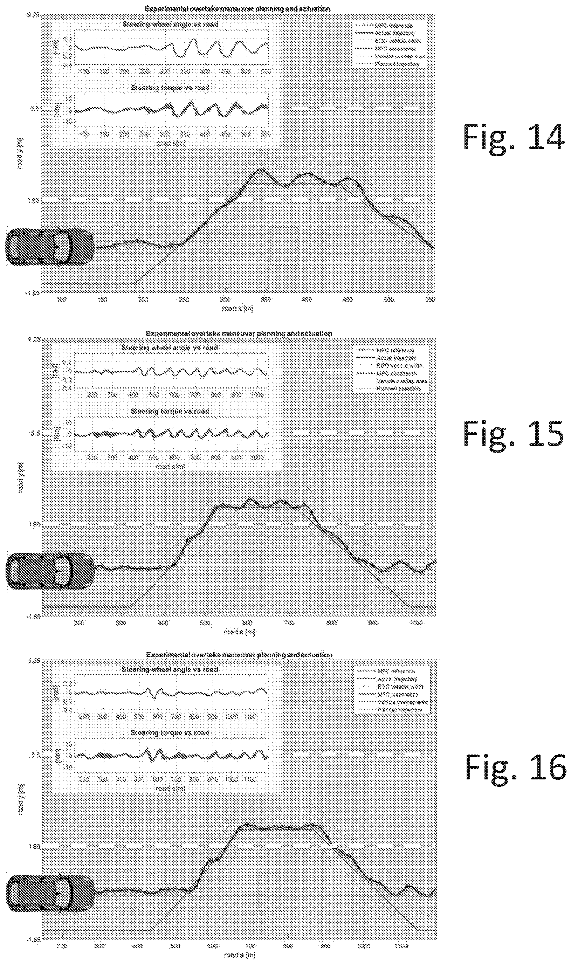

The same scenario has been performed at different speeds for the ego motor-vehicle (50, 60, 70 km/h) and the leader motor-vehicle (40, 50, 60 km/h) and same relative speed of 10 km/h. As previously described, being out of the continuous line in Figures 14, 15, 16 during dynamic maneuver in a deterministic and repeatable way is considered the goal of the present invention.

The graphs shown in Figures 14, 15, 16 show an example (ego motor-vehicle speed 70 km/h, leader vehicle speed 60 km/h) of real controlled motor-vehicle results on test track, the red line is the MPC constraint used for the optimization. The red rectangle is the space where ego motor-vehicle and leader motor-vehicle are placed side by side. In our real time implementation on dSpace MicroAutobox II, low actuator controls (steering wheel position ([21]) and longitudinal speed) have been integrated in a software architecture where the actuation loops (10 ms of sampling time) were faster than MPC planners/controllers (lateral and longitudinal). In the white graph are reported the family of curves generated by lateral MPC with an execution sampling time of 50ms. The last detail is that the oscillations on planned and executed trajectories are due to sketchy steering position control loop tuning available on prototypal motor-vehicle.

The advantages that the present invention allows to achieve may be appreciated in view of the foregoing description. In particular, the present invention foresees vehicle dynamics and guarantees the dynamical feasibility of the planned trajectory by a model-based prediction of the motor-vehicle's motion.

It proves to be an interesting technical solution since it does not require solving a joint optimization of longitudinal and lateral dynamics and generally lead to satisfying performance.

## REFERENCES

1. Global status report on road safety: time for action. World Health Organization, 2009. ISBN 9789241563840

2. B. Paden, M. Čáp, S. Zheng Yong, D. Yershov, E. Frazzoli, "A Survey of Motion Planning and Control Techniques for Self-Driving Urban Vehicles", in IEEE Transactions on Intelligent Vehicles (Volume: 1, Issue: 1, March 2016), pp. 33-55.

3. M. Montemerlo, J.B.S. Bhat, H4. Dahlkamp, D. Dolgov, S. Ettinger, D. Haehnel, T. Hilden, G. Hoffmann, B. Huhnke, et al., "Junior: The stanford entry in the urban challenge" in Journal of Field Robotics, 2008, pp. 569-597.

4. D. Ferguson, T.M. Howard and M. Likhachev, "Motion planning in urban environments: Part ii", in 2008 IEEE/RSJ International Conference on Intelligent Robots and Systems, 2008, pp. 1070-1076.

5. Y. Kuwata, Teo, J., Fiore, G., Karaman, S., Frazzoli, E., and J.P. How, "Real-time motion planning with applications to autonomous urban driving", in IEEE Transactions on Control Systems Technology, 2009, pp. 1105-1118.

6. R. Pepy, A. Lambert and H. Mounier, "Path planning using a dynamic vehicle model", in 2nd International Conference on Information & Communication Technologies, volume 1, 2006, pp. 781-786.

7. X. Li, Z. Sun, A. Kurt, and Q. Zhu. "A sampling based local trajectory planner for autonomous driving along a reference path", in IEEE Intelligent Vehicles Symposium (IV), pp. 376-381.

8. F. You, R. Zhang, G. Lie, H. Wang, H. Wen and J. Xu, "Trajectory planning and tracking control for autonomous lane change maneuver based on the cooperative vehicle infrastructure system" in Expert Systems with Applications, 2015, pp. 5932-5946.

9. D.B. Ren, J.Y. Zhang, J.M. Zhang and S.M. Cui, "Trajectory planning and yaw rate tracking control for lane changing of intelligent vehicle on curved road", in Science China Technological Sciences, 2011, pp 630-642.

10. V.T. Minh and J. Pumwa, "Feasible path planning for autonomous vehicles" in Mathematical Problems in Engineering, 2014.

11. T. Gu, J. Snider, J.M. Dolan and J.W. Lee, "Focused trajectory planning for autonomous on-road driving", in IEEE Intelligent Vehicles Symposium (IV), 2013, pp. 547-552.

12. S.J. Anderson, S.Peters, T.E. Pilutti and K. Iagnemma, "An optimal-control-based framework for trajectory planning, threat assessment, and semi-autonomous control of passenger vehicles in hazard avoidance scenarios", in International Journal of Vehicle Autonomous Systems, 2010, pp. 190-216.

13. T.M. Howard and A. Kelly, "Optimal rough terrain trajectory generation for wheeled mobile robots", in The International Journal of Robotics Research, 2007, pp. 141-166.

14. D. Ferguson, M. Darms, J. Struble, M. Taylor, et al., "Autonomous driving in urban environments: Boss and the urban challenge", in Journal of Field Robotics, 2008, pp. 425-466.

15. D. Ferguson, T.M. Howard and M. Likhachev, "Motion planning in urban environments: Part I", in 2008 IEEE/RSJ International Conference on Intelligent Robots and Systems, 2008, pp. 1063-1069.

16. J. Nilsson, M. Brannstrom, E. Coelingh and J. Fredriksson, "Lane change maneuvers for automated vehicles" in IEEE Transactions on Intelligent Transportation Systems, vol. 18, no. 5, 1 May 2017, pages. 1087-1096, Piscataway, NJ, USA.

17. J. Nilsson, M. Brannstrom, E. Coelingh and J. Fredriksson, "Longitudinal and lateral control for automated lane change maneuvers", in 2015 American Control Conference (ACC), 1 July 2015, pages 1399-1404

18. J. Nilsson, J. Silvlin, M. Brannstrom, E. Coelingh and J. Fredriksson, "If, When, and How to Perform Lane Change Maneuvers on Highways" in IEEE Intelligent Transportation Systems Magazine, Winter 2016, pp. 68-78

19. D. Madas, M. Nosratiniaz, M. Keshavarzy, P. Sundstrom, R. Philippseny, A. Eidehall, K.M. Dahlen, "On Path Planning Methods for Automotive Collision Avoidance", in 2013 IEEE Intelligent Vehicles Symposium (IV), 2013, pp. 931-937

20. CVXGEN: Code Generation for Convex Optimization -https://cvxgen.com/

21. E. Raffone, "A Reduced Order Steering State Observer for Automated Steering Control Functions", in Proceedings of the 13th International Conference on Informatics in Control, Automation and Robotics, 426-432, 2016, Lisbon, Portugal.

22. E. Raffone, C. Rei, M. Rossi, "Optimal look-ahead vehicle lane centering control design and application for mid-high speed and curved roads", in ECC19 European Control Conference, 2019.

**Claims**

1. An automotive electronic dynamics control system **(1)** for an automated motor-vehicle **(2)**;

   the automotive electronic dynamics control system **(1)** comprising two distinct Model Predictive Control (MPC)-based Trajectory Planners comprising:

   - a Longitudinal Trajectory Planner **(6)** designed to compute a planned longitudinal trajectory for the automated motor-vehicle **(2),** and
   - a Lateral Trajectory Planner **(7)** designed to compute a planned lateral trajectory for the automated motor-vehicle **(2)**;

   the automotive electronic dynamics control system **(1)** is further designed to cause the planned longitudinal trajectory to be computed before the planned lateral trajectory;
   the automotive electronic dynamics control system **(1)** is further designed to implement:

   - a Vehicle & Obstacle States Observer **(3)** designed to compute automotive observed quantities that allow potential obstacles in the surroundings of the automated motor-vehicle **(2)** to be identified and tracked;
   - a Scenario Reconstructor **(4)** designed to identify and track potential obstacles in the surroundings of the automated motor-vehicle **(2)** based on the observed quantities computed by the Vehicle & Obstacle States Observer **(3)**; and
   - a Behavioural Planner **(5)** designed to decide whether a road lane currently travelled by the automated motor-vehicle**(2)** is to be kept or a lane change manoeuvre is to be carried out based on the potential obstacles in the surroundings of the automated motor-vehicle **(2)** and to compute corresponding constraints and references for the Longitudinal and Lateral Trajectory Planners **(6, 7)**;

   **characterised in that** the Vehicle & Obstacle States Observer **(3)** is designed to receive automotive quantities measured by an automotive sensory system of the automated motor-vehicle **(2)** and/or automotive quantities computed based on automotive measured quantities and to compute the automotive observed quantities based on the received automotive measured/computed quantities;
   the automotive measured/computed quantities comprise road curvature ($\rho$), motor-vehicle heading ($\varepsilon$) and lateral position ($y$), which are indicative of a current driving route of the automated motor-vehicle **(2)**, motor-vehicle yaw rate ($\dot{\psi}$) and longitudinal and lateral accelerations ($\ddot{x}, \ddot{y}$), wheel speed ($\omega_{wheel}$), and steering angle and speed ($\delta_{sw}, \dot{\delta}_{sw}$), which are indicative of a dynamic state of the automated motor-vehicle **(2)**, and obstacle position and longitudinal dynamics of potential obstacles in the surroundings of the automated motor-vehicle **(2)**;
   the automotive observed quantities comprise road curvature ($\tilde{\rho}$), motor-vehicle heading ($\tilde{\varepsilon}$) and lateral position ($\tilde{y}$), which are indicative of an observed driving route of the automated motor-vehicle **(2)**, motor-vehicle yaw rate ($\dot{\tilde{\psi}}$) and lateral speed ($\tilde{V}_y$), and obstacle longitudinal positions, speeds, and accelerations ($\tilde{x}, \dot{\tilde{x}}, \ddot{\tilde{x}}$);
   the Scenario Reconstructor **(4)** is designed to receive and to identify and track potential obstacles in the surroundings of the automated motor-vehicle **(2)** based on the automotive measured/computed quantities and the automotive observed quantities;

the Behavioural Planner (**5**) is designed to receive from the Scenario Reconstructor (**4**) data representative of the potential obstacles in the surroundings of the automated motor-vehicle (**2**) and from the Longitudinal Trajectory Planner (**6**) one or more quantities representative of a planned longitudinal trajectory, and to compute longitudinal and lateral constraints and longitudinal and lateral reference positions ($x_{ref}$, $y_{ref}$) for the automated motor-vehicle (**2**);

the Lateral Trajectory Planner (**7**) is designed to receive from the Behavioural Planner (**5**) the lateral constraints and the lateral reference position ($y_{ref}$) for the automated motor-vehicle (**2**), and to compute quantities representative of a planned lateral trajectory and comprising motor-vehicle lateral position and speed ($y$, $V_y$), heading ($\varepsilon$), yaw rate ($\psi$), and steering angle ($\delta$);

the Longitudinal Trajectory Planner (**6**) is designed to receive from the Behavioural Planner (**5**) the longitudinal constraints and the longitudinal reference position ($x_{ref}$) for the automated motor-vehicle (**2**), and to compute quantities representative of a planned longitudinal trajectory and comprising vehicle longitudinal position, speed, and acceleration ($s$, $\dot{s}$, $\ddot{s}$).

2. The automotive electronic dynamics control system (**1**) of claim **1**, wherein the Behavioural Planner (**5**) is designed to compute constraints for the Longitudinal and Lateral Trajectory Planners (**6**, **7**) based on Times-To-Collision (TTC) of the automated motor-vehicle (**2**) with the potential obstacles in the surroundings of the automated motor-vehicle (**2**).

3. The automotive electronic dynamics control system (**1**) of claim **2**, wherein the Behavioural Planner (**5**) is designed to compute different constraints for the Longitudinal and Lateral Trajectory Planners (**6, 7**) as follows:

- when no obstacles are detected, the constraints comprise only lane boundaries,
- if only one obstacle is detected in front of the automated motor-vehicle (**2**), two cases may arise depending on the relative speed:

   ◦ overtake request: the lateral constraint is modified in order to allow the automated motor-vehicle (**2**) to perform the manoeuvre, while no longitudinal constraints are computed regarding the forward obstacle,
   ◦ tracking request: a longitudinal constraint is computed, lateral constraints still keeping the lane boundaries;

- if there is an incoming obstacle on the overtake lane together with a slower motor-vehicle in front of the automated motor-vehicle (**2**), the time to collision (TTC) relative the incoming obstacle is computed to determine whether a collision of the automated motor-vehicle (**2**) may occur with the incoming obstacle:

   ◦ if no collision is determined: overtake request, the lateral constraint is modified,
   ◦ if collision is determined: tracking request, a longitudinal constraint is computed; and

- once an overtake has started, if another obstacle in the overtake lane is detected, the obstacle on the overtake lane is tracked to maintain the safety distance.

4. Software loadable in an automotive electronic control unit and designed to cause, when executed, the automotive electronic control unit to become configured to implement the automotive electronic dynamics control system (1) as claimed in any one of the preceding claims.

**Patentansprüche**

1. Elektronisches System (1) zum Steuern von Fahrzeugdynamik für ein automatisiertes Kraftfahrzeug (2),

wobei das elektronische System (1) zum Steuern von Fahrzeugdynamik zwei getrennte Bewegungsbahnplaner auf MPC-(Model-Predictive-Control-)Basis umfasst, die Folgendes umfassen:

- einen Planer (6) für eine Bewegungsbahn in Längsrichtung, der dafür ausgestaltet ist, eine geplante Bewegungsbahn in Längsrichtung für das automatisierte Kraftfahrzeug (2) zu berechnen, und
- einen Planer (7) für eine seitliche Bewegungsbahn, der dafür ausgestaltet ist, eine geplante Bewegungsbahn in seitlicher Richtung für das automatisierte Kraftfahrzeug (2) zu berechnen,

wobei das elektronische System (1) zum Steuern von Fahrzeugdynamik ferner dafür ausgestaltet ist, zu veranlassen, dass die geplante Bewegungsbahn in Längsrichtung vor der geplanten Bewegungsbahn in seitlicher Richtung berechnet wird,
wobei das elektronische System (1) zum Steuern von Fahrzeugdynamik ferner dafür ausgestaltet ist, Folgendes zu implementieren:

- eine Beobachtungseinrichtung (3) für Fahrzeug- und Hinderniszustände, die dafür ausgestaltet ist, beobachtete Fahrzeuggrößen zu berechnen, die es ermöglichen, potentielle Hindernisse in der Umgebung des automatisierten Kraftfahrzeugs (2) zu identifizieren und nachzuverfolgen,
- eine Einrichtung zur Rekonstruktion von Szenarien (4), die dafür ausgestaltet ist, potentielle Hindernisse in der Umgebung des automatisierten Kraftfahrzeugs (2) basierend auf den beobachteten Fahrzeuggrößen, berechnet von der Beobachtungseinrichtung (3) für Fahrzeug- und Hinderniszustände zu identifizieren und nachzuverfolgen, und
- einen Verhaltensplaner (5), der dafür ausgestaltet ist, basierend auf den potentiellen Hindernissen in der Umgebung des automatisierten Kraftfahrzeugs (2) zu entscheiden, ob eine Fahrspur, die gegenwärtig von dem automatisierten Kraftfahrzeug (2) befahren wird, zu halten ist oder ob ein Spurwechselmanöver auszuführen ist, und entsprechende Einschränkungen und Bezugswerte für die Planer (6, 7) der Bewegungsbahnen in Längs- oder Seitenrichtung zu berechnen,

**dadurch gekennzeichnet, dass** die Beobachtungseinrichtung (3) für Fahrzeug- und Hinderniszustände dafür ausgestaltet ist, Fahrzeuggrößen zu empfangen, die von einem Fahrzeugsensorsystem des automatisierten Kraftfahrzeugs (2) gemessen werden, und/oder Fahrzeuggrößen, die basierend auf gemessenen Fahrzeuggrößen berechnet werden, und dafür, die beobachteten Fahrzeuggrößen basierend auf den empfangenen gemessenen/berechneten Fahrzeuggrößen zu berechnen,
die gemessenen/berechneten Fahrzeuggrößen Straßenkrümmung ($\rho$), Kraftfahrzeugkurs ($\varepsilon$) und seitliche Position ($\gamma$), die eine gegenwärtige Fahrroute des automatisierten Kraftfahrzeugs (2) angeben, eine Giergeschwindigkeit ($\dot{\psi}$) des Kraftfahrzeugs und eine Längs- und Seitenbeschleunigung ($\ddot{x}$, $\ddot{\gamma}$), eine Raddrehzahl ($\omega_{wheel}$) und einen Lenkwinkel und eine Lenkgeschwindigkeit ($\delta_{sw}$, $\dot{\delta}_{sw}$) umfassen, die einen dynamischen Zustand des automatisierten Kraftfahrzeugs (2) und eine Hindernisposition und Dynamiken in Längsrichtung von potentiellen Hindernissen in der Umgebung des automatisierten Kraftfahrzeugs (2) angeben,
die beobachteten Fahrzeuggrößen Straßenkrümmung ($\tilde{\rho}$), Kraftfahrzeugkurs ($\tilde{\in}$) und seitliche Position ($\tilde{\gamma}$), die eine beobachtete Fahrroute des automatisierten Kraftfahrzeugs (2) angeben, eine Giergeschwindigkeit ($\dot{\tilde{\psi}}$) und eine seitliche Geschwindigkeit ($\tilde{V}_\gamma$) sowie Positionen in Längsrichtung, Geschwindigkeiten und Beschleunigungen von Hindernissen ($\tilde{x}$, $\dot{\tilde{x}}$, $\ddot{\tilde{x}}$) umfassen,
die Einrichtung zur Rekonstruktion von Szenarien (4) dafür ausgestaltet ist, potentielle Hindernisse in der Umgebung des automatisierten Kraftfahrzeugs (2) basierend auf den gemessenen/berechneten Fahrzeuggrößen und den beobachteten Fahrzeuggrößen zu identifizieren und nachzuverfolgen,
der Verhaltensplaner (5) dafür ausgestaltet ist, von der Einrichtung zur Rekonstruktion von Szenarien (4) Daten zu empfangen, welche die potentiellen Hindernisse in der Umgebung des automatisierten Kraftfahrzeugs (2) darstellen, und von dem Planer (6) für eine Bewegungsbahn in Längsrichtung eine oder mehrere Größen, die eine geplante Bewegungsbahn in Längsrichtung darstellen, und Einschränkungen in Längsrichtung und seitliche Richtung sowie Referenzpositionen in Längsrichtung und seitliche Richtung ($x_{ref}$, $\gamma_{ref}$) für das automatisierte Kraftfahrzeug (2) zu berechnen,
der Planer (7) für eine seitliche Bewegungsbahn dafür ausgestaltet ist, von dem Verhaltensplaner (5) die seitlichen Einschränkungen und die seitliche Referenzposition ($\gamma_{ref}$) für das automatisierte Kraftfahrzeug (2) zu empfangen und Größen zu berechnen, die eine geplante seitliche Bewegungsbahn darstellen und eine seitliche Position und Geschwindigkeit ($\gamma$, $V_\gamma$), einen Kurs ($\varepsilon$), eine Giergeschwindigkeit ($\dot{\psi}$) und einen Lenkwinkel ($\delta$) umfassen,
der Planer (6) für eine Bewegungsbahn in Längsrichtung dafür ausgestaltet ist, von dem Verhaltensplaner (5) die Einschränkungen in Längsrichtung und die Referenzposition in Längsrichtung ($x_{ref}$) für das automatisierte Kraftfahrzeug (2) zu empfangen und Größen zu berechnen, die eine geplante Bewegungsbahn in Längsrichtung darstellen und eine Position in Längsrichtung, Geschwindigkeit und Beschleunigung ($s$, $\dot{s}$, $\ddot{s}$) des Fahrzeugs umfassen.

2. Elektronisches System (1) zum Steuern von Fahrzeugdynamik nach Anspruch 1, wobei der Verhaltensplaner (5) dafür ausgestaltet ist, basierend auf Zeit-bis-Kollision (TTC - Time-To-Collision) des automatisierten Kraftfahrzeugs (2) mit dem potentiellen Hindernis in der Umgebung des automatisierten Kraftfahrzeugs (2) Einschränkungen für die Planer (6, 7) für eine Bewegungsbahn in Längsrichtung und für eine seitliche Bewegungsbahn zu berechnen.

3. Elektronisches System (1) zum Steuern von Fahrzeugdynamik nach Anspruch 2, wobei der Verhaltensplaner (5) dafür ausgestaltet ist, verschiedene Einschränkungen für die Planer (6, 7) für eine Bewegungsbahn in Längsrichtung und für eine seitliche Bewegungsbahn wie folgt zu berechnen:

- wenn keine Hindernisse erkannt werden, umfassen die Einschränkungen nur Fahrspurbegrenzungen,
- wenn nur ein Hindernis vor dem automatisierten Kraftfahrzeug (2) erkannt wird, können abhängig von der relativen Geschwindigkeit zwei Fälle eintreten:

◦ Überholanfrage: die seitliche Einschränkung wird modifiziert, um es dem automatisierten Kraftfahrzeug (2) zu ermöglichen, das Manöver durchzuführen, während keine Einschränkungen in Längsrichtung bezüglich des vorausfahrenden Hindernisses berechnet werden,
◦ Nachverfolgungsanfrage: eine Einschränkung in Längsrichtung wird berechnet, seitliche Einschränkungen halten nach wie vor die Fahrspurbegrenzungen ein,

- wenn sich auf der Überholspur ein näherkommendes Hindernis befindet, zusammen mit einem langsameren Kraftfahrzeug vor dem automatisierten Kraftfahrzeug (2), wird die Zeit-bis-Kollision (TTC) relativ zu dem näherkommenden Hindernis berechnet, um zu bestimmen, ob eine Kollision des automatisierten Kraftfahrzeugs (2) mit dem näherkommenden Hindernis auftreten kann:

◦ wenn keine Kollision bestimmt wird: Überholanfrage, die seitliche Einschränkung wird modifiziert,
◦ wenn eine Kollision bestimmt wird: Nachverfolgungsanfrage, eine Einschränkung in Längsrichtung wird berechnet, und

- sobald ein Überholvorgang gestartet wurde, wird, wenn ein anderes Hindernis in der Überholspur erkannt wird, das Hindernis auf der Überholspur nachverfolgt, um den Sicherheitsabstand zu halten.

4. Software, die in eine elektronische Fahrzeugsteuereinheit ladbar ist und dafür ausgestaltet ist, bei ihrer Ausführung die Konfigurierung der elektronischen Fahrzeugsteuereinheit zu veranlassen, um das elektronische System (1) zum Steuern von Fahrzeugdynamik nach einem der vorhergehenden Ansprüche zu implementieren.

**Revendications**

1. Système de commande de dynamique électronique automobile (1) pour un véhicule à moteur automatique (2) ;

le système de commande de dynamique électronique automobile (1) comprenant deux planificateurs de trajectoire distincts basés sur une commande prédictive de modèle (MPC), comprenant :

- un planificateur de trajectoire longitudinale (6) conçu pour calculer une trajectoire longitudinale planifiée pour le véhicule à moteur automatique (2) ; et
- un planificateur de trajectoire latérale (7) conçu pour calculer une trajectoire latérale planifiée pour le véhicule à moteur automatique (2) ;

le système de commande de dynamique électronique automobile (1) étant en outre conçu pour amener la trajectoire longitudinale planifiée à être calculée avant la trajectoire latérale planifiée ;
le système de commande de dynamique électronique automobile (1) étant en outre conçu pour mettre en oeuvre :

- un observateur d'états de véhicule et d'obstacles (3) conçu pour calculer des quantités observées automobiles qui permettent d'identifier et de suivre des obstacles potentiels dans les environs du véhicule à moteur automatique (2) ;
- un reconstructeur de scénario (4) conçu pour identifier et suivre des obstacles potentiels dans les environs du véhicule à moteur automatique (2) sur la base des quantités observées calculées par l'observateur d'états de véhicule et d'obstacles (3) ; et
- un planificateur de comportement (5) conçu pour décider si une voie de circulation actuellement empruntée par le véhicule à moteur automatique (2) doit être conservée, ou si une manoeuvre de changement de voie doit être effectuée sur la base des obstacles potentiels dans les environs du véhicule à moteur automatique (2), et pour calculer des contraintes et références correspondantes pour les planificateurs de trajectoire longitudinale et latérale (6, 7);

**caractérisé en ce que** l'observateur d'états de véhicule et d'obstacles (**3**) est conçu pour recevoir des quantités automobiles mesurées par un système sensoriel automobile du véhicule à moteur automatique (**2**) et/ou des quantités automobiles calculées sur la base de quantités mesurées automobiles, et pour calculer les quantités observées automobiles sur la base des quantités mesurées/calculées automobiles reçues ;

les quantités mesurées/calculées automobiles comprennent une courbure de route ($\rho$), un cap ($\varepsilon$) et une position latérale de véhicule à moteur ($\gamma$), qui sont indicatifs d'un itinéraire de conduite actuel du véhicule à moteur automatique (**2**), une vitesse de lacet ($\dot{\psi}$) et des accélérations longitudinales et latérales de véhicule à moteur ($\ddot{x}, \ddot{y}$), une vitesse de roues ($\omega_{wheel}$), une vitesse et un angle de braquage ($\delta_{sw}, \dot{\delta_{sw}}$), qui sont indicatifs d'un état dynamique du véhicule à moteur automatique (**2**), et une position d'obstacles et une dynamique longitudinale d'obstacles potentiels dans les environs du véhicule à moteur automatique (**2**) ;

les quantités observées automobiles comprennent une courbure de route ($\tilde{\rho}$), un cap ($\tilde{\varepsilon}$) et une position latérale de véhicule à moteur ($\tilde{y}$), qui sont indicatifs d'un itinéraire de conduite observé du véhicule à moteur automatique (**2**), une vitesse de lacet ($\tilde{\dot{\psi}}$) et un vitesse latérale de véhicule à moteur ($\tilde{V}_y$), et des positions longitudinales, des vitesses et des accélérations d'obstacles ($\tilde{x}, \tilde{\dot{x}}, \tilde{\ddot{x}}$);

le reconstructeur de scénario (**4**) est conçu pour recevoir, et pour identifier et suivre les obstacles potentiels dans les environs du véhicule à moteur automatique (**2**) sur la base des quantités mesurées/calculées automobiles et des quantités observées automobiles ;

le planificateur de comportement (**5**) est conçu pour recevoir, en provenance du reconstructeur de scénario (**4**), des données représentatives des obstacles potentiels dans les environs du véhicule à moteur automatique (**2**) et, en provenance du planificateur de trajectoire longitudinale (**6**), une ou plusieurs quantités représentatives d'une trajectoire longitudinale planifiée, et pour calculer des contraintes longitudinales et latérales et des positions de référence longitudinales et latérales ($x_{ref}$, $y_{ref}$) pour le véhicule à moteur automatique (**2**);

le planificateur de trajectoire latérale (**7**) est conçu pour recevoir, en provenance du planificateur de comportement (**5**), les contraintes latérales et la position de référence latérale ($y_{ref}$) pour le véhicule à moteur automatique (**2**), et pour calculer des quantités représentatives d'une trajectoire latérale planifiée et comprenant une position latérale et une vitesse du véhicule à moteur ($y, V_y$), un cap ($\varepsilon$), une vitesse de lacet ($\dot{\psi}$) et un angle de braquage ($\delta$);

le planificateur de trajectoire longitudinale (**6**) est conçu pour recevoir, en provenance du planificateur de comportement (**5**), les contraintes longitudinales et la position de référence longitudinale ($x_{ref}$) pour le véhicule à moteur automatique (**2**), et pour calculer des quantités représentatives d'une trajectoire longitudinale planifiée et comprenant une position longitudinale, une vitesse et une accélération de véhicule ($s, \dot{s}, \ddot{s}$).

2. Système de commande de dynamique électronique automobile (**1**) selon la revendication 1, dans lequel le planificateur de comportement (**5**) est conçu pour calculer des contraintes pour les planificateurs de trajectoire longitudinale et latérale (**6, 7**) sur la base d'un temps avant collision (TTC) du véhicule à moteur automatique (**2**) avec les obstacles potentiels dans les environs du véhicule à moteur automatique (**2**).

3. Système de commande de dynamique électronique automobile (**1**) selon la revendication 2, dans lequel le planificateur de comportement (**5**) est conçu pour calculer différentes contraintes pour les planificateurs de trajectoire longitudinale et latérale (**6, 7**), comme suit :

   - lorsqu'aucun obstacle n'est détecté, les contraintes ne comprennent que des limites de voie ;
   - si un seul obstacle est détecté devant le véhicule à moteur automatique (**2**), deux cas peuvent se présenter en fonction de la vitesse relative :

     ◦ une demande de dépassement : la contrainte latérale est modifiée afin de permettre au véhicule à moteur automatique (**2**) d'effectuer la manoeuvre, tandis qu'aucune contrainte longitudinale n'est calculée en ce qui concerne l'obstacle avant ;
     ◦ une demande de suivi : une contrainte longitudinale est calculée, mais les contraintes latérales conservent les limites de voie ;

   - si un obstacle entrant est présent sur la voie de dépassement, et qu'un véhicule à moteur plus lent est présent devant le véhicule à moteur automatique (**2**), le temps avant collision (TTC) relatif à l'obstacle entrant est calculé pour déterminer si une collision du véhicule à moteur automatique (**2**) peut se produire avec l'obstacle entrant :

     ◦ si aucune collision n'est déterminée : demande de dépassement, la contrainte latérale est modifiée ;
     ◦ si une collision est déterminée : demande de suivi, une contrainte longitudinale est calculée ; et

- dès lors qu'un dépassement a commencé, si un autre obstacle sur la voie de dépassement est détecté, l'obstacle sur la voie de dépassement est suivi pour maintenir la distance de sécurité.

4. Logiciel pouvant être chargé dans une unité de commande électronique automobile, et conçu pour amener, lorsqu'il est exécuté, l'unité de commande électronique automobile à être configurée de manière à mettre en oeuvre le système de commande de dynamique électronique automobile **(1)** selon l'une quelconque des revendications précédentes.

Fig. 1

Fig. 2

Fig. 3

Fig. 4

Fig. 5a

Fig. 5b

Fig. 5c

Fig. 6a

$TTC > Thr$

$Ylat_{min,i,t}$

Fig. 6b

$TTC \leq Thr$

$Xmax_{i,t}$

Fig. 7

EP 4 031 428 B1

Fig. 8

Fig. 9

Fig. 10a

Fig. 10b

Fig. 10c

Fig. 10d

Fig. 11a

Fig. 11b

Fig. 11c

Fig. 11d

EP 4 031 428 B1

Fig. 12

Fig. 13

Fig. 14

Fig. 15

Fig. 16

**EP 4 031 428 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015161895 A1

**Non-patent literature cited in the description**

- Global status report on road safety: time for action. World Health Organization, 2009
- **B. PADEN ; M. ČÁP ; S. ZHENG YONG ; D. YERSHOV ; E. FRAZZOLI.** A Survey of Motion Planning and Control Techniques for Self-Driving Urban Vehicles. *IEEE Transactions on Intelligent Vehicles,* March 2016, vol. 1 (1), 33-55
- **M. MONTEMERLO ; J.B.S. BHAT ; H4. DAHLKAMP ; D. DOLGOV ; S. ETTINGER ; D. HAEHNEL ; T. HILDEN ; G. HOFFMANN ; B. HUHNKE et al.** Junior: The stanford entry in the urban challenge. *Journal of Field Robotics,* 2008, 569-597
- **D. FERGUSON ; T.M. HOWARD ; M. LIKHACHEV.** Motion planning in urban environments: Part ii. *2008 IEEE/RSJ International Conference on Intelligent Robots and Systems,* 2008, 1070-1076
- **Y. KUWATA ; TEO, J. ; FIORE, G. ; KARAMAN, S. ; FRAZZOLI, E. ; J.P. HOW.** Real-time motion planning with applications to autonomous urban driving. *IEEE Transactions on Control Systems Technology,* 2009, 1105-1118
- **R. PEPY ; A. LAMBERT ; H. MOUNIER.** Path planning using a dynamic vehicle model. *2nd International Conference on Information & Communication Technologies,* 2006, vol. 1, 781-786
- **X. LI ; Z. SUN ; A. KURT ; Q. ZHU.** A sampling based local trajectory planner for autonomous driving along a reference path. *IEEE Intelligent Vehicles Symposium (IV),* 376-381
- **F. YOU ; R. ZHANG ; G. LIE ; H. WANG ; H. WEN ; J. XU.** Trajectory planning and tracking control for autonomous lane change maneuver based on the cooperative vehicle infrastructure system. *Expert Systems with Applications,* 2015, 5932-5946
- **D.B. REN ; J.Y. ZHANG ; J.M. ZHANG ; S.M. CUI.** Trajectory planning and yaw rate tracking control for lane changing of intelligent vehicle on curved road. *Science China Technological Sciences,* 2011, 630-642
- **V.T. MINH ; J. PUMWA.** Feasible path planning for autonomous vehicles. *Mathematical Problems in Engineering,* 2014
- **T. GU ; J. SNIDER ; J.M. DOLAN ; J.W. LEE.** Focused trajectory planning for autonomous on-road driving. *IEEE Intelligent Vehicles Symposium,* 2013, 547-552
- **S.J. ANDERSON ; S.PETERS ; T.E. PILUTTI ; K. IAGNEMMA.** An optimal-control-based framework for trajectory planning, threat assessment, and semi-autonomous control of passenger vehicles in hazard avoidance scenarios. *International Journal of Vehicle Autonomous Systems,* 2010, 190-216
- **T.M. HOWARD ; A. KELLY.** Optimal rough terrain trajectory generation for wheeled mobile robots. *The International Journal of Robotics Research,* 2007, 141-166
- **D. FERGUSON ; M. DARMS ; J. STRUBLE ; M. TAYLOR et al.** Autonomous driving in urban environments: Boss and the urban challenge. *Journal of Field Robotics,* 2008, 425-466
- **D. FERGUSON ; T.M. HOWARD ; M. LIKHACHEV.** Motion planning in urban environments: Part I. *2008 IEEE/RSJ International Conference on Intelligent Robots and Systems,* 2008, 1063-1069
- **J. NILSSON ; M. BRANNSTROM ; E. COELINGH ; J. FREDRIKSSON.** Lane change maneuvers for automated vehicles. *IEEE Transactions on Intelligent Transportation Systems,* 01 May 2017, vol. 18 (5), 1087-1096
- **J. NILSSON ; M. BRANNSTROM ; E. COELINGH ; J. FREDRIKSSON.** Longitudinal and lateral control for automated lane change maneuvers. *2015 American Control Conference (ACC),* 01 July 2015, 1399-1404
- **J. NILSSON ; J. SILVLIN ; M. BRANNSTROM ; E. COELINGH ; J. FREDRIKSSON.** If, When, and How to Perform Lane Change Maneuvers on Highways. *IEEE Intelligent Transportation Systems Magazine, Winter 2016,* 2016, 68-78
- **D. MADAS ; M. NOSRATINIAZ ; M. KESHAVARZY ; P. SUNDSTROM ; R. PHILIPPSENY ; A. EIDEHALL ; K.M. DAHLEN.** On Path Planning Methods for Automotive Collision Avoidance. *2013 IEEE Intelligent Vehicles Symposium (IV),* 2013, 931-937

- *CVXGEN: Code Generation for Convex Optimization, https://cvxgen.com*
- **E. RAFFONE.** A Reduced Order Steering State Observer for Automated Steering Control Functions. *Proceedings of the 13th International Conference on Informatics in Control, Automation and Robotics,* 2016, 426-432
- **E. RAFFONE ; C. REI ; M. ROSSI.** Optimal look-ahead vehicle lane centering control design and application for mid-high speed and curved roads. *ECC19 European Control Conference,* 2019